# EUROPÄISCHE PATENTSCHRIFT

(11) **EP 2 622 393 B1**
(45) Veröffentlichungstag und Bekanntmachung des Hinweises auf die Patenterteilung: **26.02.2020**
(21) Anmeldenummer: 11761378.6
(22) Anmeldetag: 27.09.2011
(51) Int. Cl.: G02B 6/38

(54) **STECKVERBINDER**
PLUG-IN CONNECTOR
CONNECTEUR

(30) Priorität: 01.10.2010 CH 16032010
(43) Veröffentlichungstag der Anmeldung: 07.08.2013
(73) Patentinhaber: HUBER+SUHNER AG, 9100 Herisau (CH)
(72) Erfinder: SCOPIC, Nesa, 9100 Herisau (CH); ZAINA, Patrick, 9200 Gossau (CH); GADMER, Laif, 9240 Uzwil (CH)
(74) Vertreter: Rentsch Partner AG
(86) Internationale Anmeldenummer: PCT/EP2011/066749
(87) Internationale Veröffentlichungsnummer: WO 2012/041840

(56) Entgegenhaltungen:
- EP-A1- 1 199 584
- WO-A1-2009/107306
- US-A1- 2002 081 077

## Beschreibung

Die Erfindung liegt auf dem Gebiet der Steckverbinder zum Verbinden wenigstens eines Leiters, insbesondere auf dem Gebiet der Steckverbinder für Leiterkabel mit einem optischen Leiter.

Aus dem Stand der Technik sind Steckverbinder bekannt, um Leiter, wie z. b. einen optischen Leiter mit einem Gerät oder anderem Leiter verbinden oder an diese anschliessen zu können. Der Steckverbinder kann hierfür in einen weiteren Steckverbinder, bzw. mittels einer Kupplung, an einem Gerät oder anderem Leiter, mit dem die Verbindung hergestellt werden soll, lösbar eingesteckt werden. Insbesondere bei optischen Leitern ist eine exakte Positionierung des Leiters innerhalb einer Steckverbindung nötig, um eine einwandfreie optische Übertragung sicher zu stellen. Bereits kleinste Unregelmässigkeiten an einer Verbindungsstelle können eine Übertragung stören oder vollständig unterbrechen.

Ein Steckverbinder nach dem Stand der Technik umfasst in der Regel einen hülsenförmigen Grundkörper, in dem ein Leiterhalter untergebracht ist, der einen Leiter, wie etwa eine Glasfaser, hält. Der Leiterhalter besteht zum Beispiel aus einer Ferrule mit einem Ferrulenhalter, welcher die Ferrule innerhalb des Grundkörpers ausrichten kann. Die Glasfaser ist grösstenteils in einem flexiblen Leiterkabel untergebracht. Zur Herstellung der Verbindung ist die Faser aus dem Kabel frei gelegt und innerhalb der Ferrule geführt. An einem hinteren Ende des Steckverbinders tritt der Leiter aus diesem aus und kann um die Aussenkante des Steckverbinders gebogen werden. Um den Leiter vor einem Abknicken oder Brechen an dieser Kante zu schützen weist der Steckverbinder einen Knickschutz auf, der den Leiter im Austrittsbereich aus dem Steckverbinder umgibt und ein übermässiges Abbiegen um einen geringen Biegeradius, bei dem der Leiter abknicken oder brechen könnte, verhindert. Hierfür erstreckt sich ein flexibel biegsamer Bereich des Knickschutzes über das Kabel. Der biegsame Bereich kann gebogen, jedoch nicht geknickt werden. Das Kabel kann so am Austritt aus dem Steckverbinder in eine gewünschte Richtung gebracht werden, ohne die Gefahr das Kabel dabei zu beschädigen. Ein solcher Knickschutz ist beispielsweise aus der US 5,461,690 bekannt.

Um eine sichere Verbindung des Leiters zu gewährleisten, ist der Leiterhalter innerhalb des Grundkörpers in axialer Richtung beweglich gelagert und wird durch eine Feder in eine Vorschubposition vorgespannt, in der der Leiter relativ zum Grundkörper in Einsteckrichtung vorgeschoben wird. Der Leiter kann entgegen der Federkraft in eine Einschubposition entgegen der Einsteckrichtung relativ zum Grundkörper verschoben werden, so dass eine zur Herstellung eines Kontakts erforderliche Druckkraft sichergestellt werden kann und gleichzeitig eine sichere Leiterverbindung hergestellt wird. Die Feder wird hierfür über den Leiterhalter aufgeschoben bis sie an einer Anschlagkante am Leiterhalter anstösst. Hinter der Feder wird ein Federgegenstück auf den Leiterhalter aufgeschoben, welches eine zweite Anschlagkante für die Feder aufweist. Das Federgegenstück wird mit dem Grundkörper verklebt oder verrastet. Das Kabelende, aus dem der Leiter austritt, der im Leiterhalter gehalten wird, kann am Federgegenstück gesichert werden. Ferner schliesst sich an das Federgegenstück der Knickschutz als separates Teil an und umgibt den Leiter, bzw. das Kabel mit dem Leiter, nachdem es aus dem Steckverbinder austritt. Den Grundkörper, das Federgegenstück und einen Teil des Knickschutzes umgibt ein Entriegelungselement, das relativ zum Grundkörper beweglich ist, um eine Verriegelung zu lösen, welche den Sitz des Steckverbinders in der Kupplung sichert. Ein solcher Steckverbinder ist beispielweise aus der EP 1091226 B1 bekannt, die einen als LC-Verbinder bekannten Steckverbinder zeigt.

Die WO 2009/107306 & EP 2 249 189 zeigen einen Steckverbinder mit einer Ferrule und mit einem an einem hinteren Gehäuse angebrachten Knickschutz und einem Grundkörper. Das hintere Gehäuse weist aussenliegende Nocken auf, welche in innenliegende Nuten des Grundkörpers eingreifen. Der Knickschutz weist innenliegende Nocken auf, welche in aussenliegende Nuten des hinteren Gehäuses eingreifen. In einer Variante sind das hintere Gehäuse und der daran angebrachte Knickschutz 95 einstückig ausgebildet.

Die EP 1 199 584 zeigt einen Steckverbinder mit einer Ferrule, welche in einem Grundkörper gehalten ist. Ein hinters Gehäuse weist aussenstehende Nocken auf, welche für den Eingriff in Nuten des Grundkörpers vorgesehen sind. Am hinteren Gehäuse schliesst ein Knickschutz an.

Die US 2002/0081077 zeigt einen Steckverbinder mit einer Ferrule. Ein Grundkörper weist Nuten auf, in welche aussenliegende Nocken eines hinteren Gehäuses eingreifen. Die Ferrule ist in einem Führungskörper gehalten, welcher im hintern Gehäuse geführt wird. Am hinteren Gehäuse schliesst ein Knickschutz an.

Bei der Herstellung eines bekannten Steckverbinders müssen diverse einzelne Bauteile zusammengesetzt werden. Dabei können jedoch nur minimale Positionsabweichungen toleriert werden, damit eine ausreichende Qualität und Präzision für eine gute Übertragung sicher gestellt ist. Eine grosse Anzahl von Bauteilen wirkt sich nachteilig auf die Gesamtbaugrösse und den Herstellungsprozess des Steckverbinders aus. Es besteht ein erhöhter Platzbedarf und es werden zusätzliche Funktionalitäten notwendig, wie etwa das Herstellen geeigneter Bauteilverbindungen oder die Sicherstellung einer exakten Positionierung der Bauteile zu einander.

Es ist eine Aufgabe der vorliegenden Erfindung einen Steckverbinder mit einem einfachen Aufbau bestehend aus wenigen Bauteilen zu schaffen, der kurz baut, eine zuverlässige Steckverbindung herstellt, einen ausreichenden Schutz des Leiters sicherstellt sowie einen geringen Produktionsaufwand und niedrige Produktionskosten aufweist.

Ein Steckverbinder zum Verbinden wenigstens eines Leiters nach der vorliegenden Erfindung umfasst einen Grundkörper mit einer durchgehenden Öffnung, wenigstens einen rohrartigen Leiterhalter und einen Knickschutz. Der Leiterhalter ist zumindest teilweise innerhalb des Grundkörpers angeordnet und in diesem in axialer Richtung beweglich gelagert. Der Knickschutz ist um einen Leiter angeordnet und schliesst sich axial an den Grundkörper an oder steht zumindest teilweise über den Grundkörper hervor. Zwischen dem Leiterhalter und dem Knickschutz ist erfindungsgemäss wenigstens ein Federelement eingespannt, welches der Positionierung des Leiters relativ zum Grundkörper, bzw. zur Erzeugung einer Kontaktkraft zur Verbindung des Leiters dient. Demnach wird der Kraftfluss einer von der Feder auf den Knickschutz ausgeübten Kraft über den Knickschutz auf den Grundkörper geleitet. Der Grundkörper wiederum kann beispielweise mit Hilfe eines Verriegelungssystems in der Kupplung lösbar gehalten werden. Vorzugsweise grenzt das Federelement unmittelbar an den Grundkörper und den Knickschutz an. Es sind in der Regel keine weiteren Zwischenteile nötig.

Gemäss der Erfindung kommt der Steckverbinder mit nur drei Basisbauteile aus, die zueinander ausgerichtet werden und mittels des Federelements zu einander positioniert werden können. Zur sicheren Führung und Lagerung des Leiterhalters als solchen sind im Wesentlichen nur zwei Bauteile nötig. Im Vergleich zu bekannten Steckverbindersystemen liegt somit eine geringere Anzahl an Bauteilen zur Ausbildung eines Steckverbinders vor. Somit entstehen geringere Produktionskosten und die Herstellungszeiten vermindern sich. Ferner reduziert sich die Gefahr, dass bei der Fertigung oder beim Zusammensetzen der Bauteile vorgegebene und erforderliche Toleranzwerte überschritten werden oder eine unpräzise Ausrichtung der Bauteile zueinander erfolgt. Insgesamt weist der erfindungsgemässe Steckverbinder eine vereinfachte Konstruktion auf und ist daher weniger anfällig für Fehler bei der Herstellung und eine fehlerhafte Funktion bei der Verwendung eines Steckverbinders.

Vorzugsweise werden die einzelnen Gehäuseteile oder Bauteile aus Kunststoff gefertigt und z. B. mittels eines Spritzgussverfahrens hergestellt. Dadurch kann eine kostengünstige Produktion der Bauteile in grossen Stückzahlen erfolgen.

Der Grundkörper kann hülsenartig ausgebildet sein und vorteilhafter Weise einen Aussenumfang mit rechteckigem Querschnitt aufweisen, so dass sich vier Aussenflächen ergeben, die unterschiedliche Funktionalitäten aufweisen können. Beispielsweise kann ein Entriegelungskörper eines obern erwähnten Verriegelungssystems zur Entriegelung des Steckverbinders aus einer Steckverbindung vorgesehen sein, der den Grundkörper umgibt und relative zu diesem beweglich auf dem Aussenumfang des Grundkörpers gelagert ist. Eine Aussenfläche des Grundkörpers kann beispielsweise Anschlagflächen oder Rampen aufweisen, welche mit dem Entriegelungskörper zusammenwirken. Grundsätzlich könnte eine Entriegelungseinrichtung aber unmittelbar auf einer Aussenfläche des Grundkörpers vorgesehen sein, beispielsweise als federnd ausgebildeter Verriegelungsarm. Der Steckverbinder kann beispielweise als LC- oder SC-Verbinder vorgesehen sein.

Der Innenumfang des Grundkörpers kann im Wesentlichen einen runden Querschnitt aufweisen oder auch nur bereichsweise mit einem runden Querschnitt ausgebildet sein, wobei vorzugsweise in einem Bereich des Innenumfangs wenigstens eine Führungsfläche ausgebildet ist, die zur Führung und zur Ausrichtung des Leiterhalters relativ zum Grundkörper dient. Bei einer Ausführungsform weist eine Führung für den Leiterhalter mehrere Führungsflächen auf, so dass sich ein Innenumfangsbereich mit einem polygonalen, z. B. rechteckigen Querschnitt ergibt. Entsprechend sind am Leiterhalter komplementäre Führungsflächen ausgebildet, die an den Führungsflächen des Grundkörpers gleitend anliegen. Die Führungsflächen des Grundkörpers und des Leiterhalters bilden gemeinsam eine Führungseinrichtung.

Der Grundkörper weist wenigstens einen Stoppanschlag auf, der z. B. radial nach innen abstehend ausgebildet ist und an welchem wenigstens ein radial nach aussen vorstehender Vorschubanschlag des Leiterhalters angreift, wenn der Leiterhalter relativ zum Grundkörper in Vorschubposition ist. In der Vorschubposition ist der Leiterhalter soweit als möglich in Einsteckrichtung relativ zum Grundkörper verschoben. In der Regel ragt der Leiterhalter in der Vorschubposition aus dem Grundkörper hervor. Aus dieser Position ist der Leiterhalter relativ zum Grundkörper entgegen der Einsteckrichtung, in die der Steckverbinder eingesteckt wird, und entgegen der Kraft der Feder relativ zum Grundkörper beweglich. Beim Einstecken des Steckverbinders kann dadurch die notwendige Kontaktkraft aufgebaut werden. Der Leiterhalter kann bis zu einer Einschubposition, in welcher er gegen einen Einschubanschlag stösst, in den Grundkörper eingeschoben werden. Vorzugsweise bildet der Knickschutz einen Einschubanschlag gegen den der Leiterhalter in der Einschubposition stösst, bzw. ist der Einschubanschlag am Knickschutz ausgebildet.

Nach der Erfindung ist der Grundkörper unmittelbar mit dem Knickschutz verbunden oder verbindbar. Es bedarf keiner weiteren Zwischenbauteile zur Verbindung des Grundkörpers mit dem Knickschutz. Der Knickschutz ist hülsenförmig ausgebildet und weist einen Durchgangskanal auf, in dem der Leiterhalter teilweise aufgenommen ist, wobei der Leiterhalter innerhalb des Durchgangskanals in axialer Richtung beweglich ist. Vorzugsweise weist der Knickschutz eine Innen-, bzw. eine Aussenumfangsfläche auf, die korrespondierend zur Aussen-, bzw. Innenumfangsfläche des Grundkörpers ausgebildet ist, um mit diesem eine formschlüssige Verbindung eingehen zu können. Beispielsweise weist der Knickschutz einen rechteckigen Querschnitt auf, der geringfügig grösser oder kleiner als ein rechteckiger Querschnitt des Grundkörpers ist, so dass der Knickschutz und der Grundkörper eine Steckverbindung eingehen können. Die rechteckige Formgebung ermöglicht dabei zudem eine exakte Ausrichtung einer Rotationsstellung des Grundkörpers relativ zum Knickschutz um eine gemeinsame Längsachse, da die Steckverbindung nur in einer bestimmten Rotationsstellung möglich ist. Grundsätzlich kann auch der Grundkörper über den Knickschutz oder in den Knickschutz hinein gesteckt werden und es können auch nicht rechteckige Formen von korrespondierenden Umfangsflächen vorliegen, wie etwa Umfangsflächen mit rundem oder ovalem Querschnitt. Der Grundkörper und der Knickschutz können auch mit einer Rastverbindung versehen sein, um diese beiden Bauteile miteinander zu verbinden. Hierzu können z. B. am Grundkörper, bzw. dem Knickschutz, wenigstens ein Rastnocken oder eine oder mehrere Rastrippen und dazu passend am Knickschutz, bzw. am Grundkörper, wenigstens eine Einrastvertiefung, eine Öffnung oder mehrere Rastgegenrippen ausgebildet sein. Durch die Flexibilität der Kunststoffbauteile können diese in einander gesteckt werden und verrasten durch die Relaxation des Kunststoffmaterials. Es kann auch eine Schnapp- oder Schraubverbindung oder eine reibschlüssige Verbindung vorgesehen werden. Der Grundkörper und der Steckschutz werden durch die Verbindung zumindest derart fest miteinander verbunden, dass sie durch Einwirken der Federkraft nicht von einander gelöst werden, sondern die Federkraft vom Knickschutz auf den Grundkörper übertragen wird. Zwischen dem Grundkörper und dem Knickschutz ist vorteilhafter Weise eine Führung vorgesehen, welche die beiden Bauteile beim Zusammensetzen zu einander ausrichtet und in ihre vorgesehene Position führt. Als Führung kann z. B. an einem von Grundkörper und Knickschutz eine Führungsnut oder -rille vorgesehen sein, in welche ein Führungsnocken oder -stift am anderen von Grundkörper und Knickschutz eingreift und darin geführt beweglich ist.

Zur Aufnahme des Federelements zwischen Leiterhalter und Knickschutz weist der Knickschutz einen Federanschlag und der Leiterhalter einen Federgegenanschlag auf. Das Federelement ist zwischen diesen Anschlägen eingesetzt, so dass ein erstes und ein zweites Ende des Federelements an den Anschlägen angreifen. Eine Frontfläche des Knickschutzes bildet den Federanschlag. Das heisst, das Federelement schlägt an einer im Wesentlichen radial verlaufenden Vorderseite des hülsenförmigen Knickschutzes an, die dem Federelement axial gegenüber liegt. Grundsätzlich kann der Federanschlag z. B. auch durch einen abstehenden Vorsprung an einer axial verlaufenden Fläche des Knickschutzes vorgesehen sein. Der Federgegenanschlag am Leiterhalter ist beispielweise als radial nach aussen vorstehender Vorsprung oder Absatz am Aussenumfang des Leiterhalters ausgebildet.

Vorzugsweise ist das Federelement als Schraubenfeder ausgebildet, die um den Leiterhalter zu liegen kommt und auf diesem beweglich ist. Es können aber auch andere Federelemente, wie z. B. eine Art Blattfeder oder auch elastisches Material, etwa Gummi, verwendet werden. In der Vorschubposition des Leiterhalters ist das Federelement geringfügig zwischen dem Leiterhalter und dem Knickschutz vorgespannt und hält den Leiterhalter gegenüber dem Grundkörper in der Vorschubposition. Grundsätzlich kann das Federelement in dieser Vorschubposition auch ohne eine Vorspannung vorgesehen sein, solange das Federelement derart am Leiterhalter und am Knickschutz anliegt, dass es den Leiterhalter in einer Ruheposition relativ zum Grundkörper halten kann. Beim Einschieben des Leiterhalters in den Grundkörper wird das Federelement komprimiert bis der Leiterhalter am Einschubanschlag anstösst. Dabei kann das Federelement vollständig komprimiert sein. Im Falle einer Schraubenfeder kommen dann die Federspiralen aufeinander zu liegen. Der Einschubanschlag für den Leiterhalter bildet somit gleichzeitig den Federanschlag für das Federelement. Die Konstruktion des Knickschutzes kann dadurch vereinfacht werden.

Der Durchgangskanal des Knickschutzes wird von einem im Inneren des Knickschutzes ausgeformten Kanalrohr mit einem kreisförmigen

Querschnitt gebildet. Das Kanalrohr kann somit als Führung für den rohrartigen Leiterhalter entlang der Längsachse des Steckverbinders dienen. Das Kanalrohr kann konisch ausgebildet sein und sich in Richtung des Kabelendes des Steckverbinders verjüngen. Der Knickschutz weist eine das Kanalrohr umgebende Wandung als einen Aussenhülsenbereich auf, so dass sich ein Zwischenraum zwischen dem Kanalrohr und der Wandung in Umfangsrichtung ergibt. Beim Zusammensetzen von Grundkörper und Knickschutz kann somit ein Ende des Grundkörpers zwischen Wandung und Kanalrohr des Knickschutzes aufgenommen werden. Die Wandung weist dabei vorzugsweise die gleiche Querschnittsform wie der Grundkörper auf und geht mit dem Grundkörper eine Steck-, bzw. Rastverbindung ein. Hierfür können die oben beschriebenen Rasteinrichtungen an der Wandung angeordnet sein. Das innerhalb der Wandung liegende Kanalrohr umfasst vorzugsweise den Einschubanschlag für den Leiterhalter, wobei die Frontseite des Kanalrohrs als Anschlag dienen kann. Im Falle eines Federelements in Form einer Schraubenfeder entspricht vorteilhafter Weise der Durchmesser des Kanalrohrs im Wesentlichen einem Durchmesser der Schraubenfeder. Die Frontfläche des Kanalrohrs kann somit als Federanschlag dienen.

Der Leiterhalter ist vorzugsweise aus einer Ferrule, einem Ferrulenhalter und einer in den Knickschutz, beispielweise in den Durchgangskanal, hineinragenden Ferrulenverlängerung aufgebaut. Ein solcher Leiterhalter entspricht den üblichen Ausführungen zum Halten eines Leiters innerhalb des Steckverbinders, so dass herkömmliche Leiter- und Kabelsysteme für den erfindungsgemässen Steckverbinder verwendet werden können. Die Ferrule kann dabei aus Kunststoff, Metall, Keramik oder der gleichen bestehen. Der Ferrulenhalter weist vorzugsweise einen Teil der Führungseinrichtung zur Führung des Leiterhalter innerhalb des Grundkörpers auf. Beispielsweise ist der Ferrulenhalter polygonal mit Führungsflächen ausgebildet, welche an Führungsgegenflächen am Grundkörper anliegen. Somit kann eine präzise Führung beim Einschieben des Leiterhalters entgegen der Federkraft erreicht werden.

In einer Ausführungsform eines Steckverbinders kann das Kabel, aus welchem der Leiter austritt und von dem Leiterhalter, bzw. der Ferrule, aufgenommen wird, am Knickschutz oder am Grundkörper festgelegt werden. Vorzugsweise wird das Kabel mit dem Knickschutz verbunden. Hierfür kann eine Klemmhülse oder Crimphülse vorgesehen werden, die das Kabel am Knickschutz festklemmt. Die Klemmhülse kommt dabei vorzugweise teilweise innerhalb des Knickschutzes zu liegen und kann teilweise in den flexiblen biegsamen Bereich des Knickschutzes hervorstehen. Grundsätzlich kann das Kabel, bzw. der Kabelmantel, auch am Grundkörper befestigt werden.

Mit Hilfe der im Vergleich zum Stand der Technik reduzierten Anzahl an Bauteilen und der multifunktionalen Verwendung vorliegender Bauteile kann der erfindungsgemässe Steckverbinder kostengünstig und schnell produziert werden. Gleichzeitig kann eine hohe Präzision zur Erfüllung der erforderlichen Normen erreicht werden.

Bevorzugte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1:: eine Längsansicht auf einen erfindungsgemässen Steckverbunder,
- Fig. 2:: einen Längsschnitt durch den erfindungsgemässen Steckverbinder und
- Fig. 3:: eine Explosionsdarstellung des erfindungsgemässen Steckverbinders.

In den Figuren bezeichnet ein vorderes Ende des Steckverbinders ein links dargestelltes Einsteckende, mit welchem der Steckverbinder in ein weiteres Verbindungsstück (nicht dargestellt) eingesteckt werden kann. Ein hinteres Ende bezeichnet ein rechts dargestelltes Kabelende, aus dem ein Leiterkabel aus dem Steckverbinder herausragt. Eine Längsachse L verläuft mittig durch den Steckverbinder.

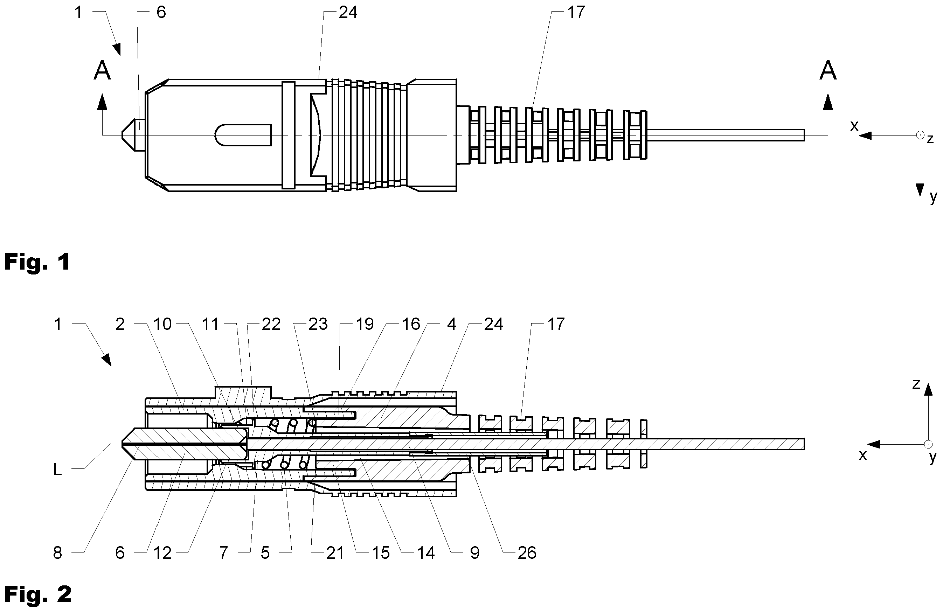

In Figur 1 ist eine Aufsicht auf einen erfindungsgemässen Steckverbinder 1 nach der Art eines SC-Verbinders gezeigt. In der Figur ist ein Entriegelungskörper 24 ersichtlich, der als eine Art Gehäuse für einen Grundkörper 2, einen Knickschutz 4 und ein Federelement 5 dient. Am vorderen Ende ragt eine Ferrule 6 aus dem Entriegelungskörper 1 und dem Grundkörper hervor. Am hinteren Ende tritt ein Biegebereich 17 des Knickschutzes aus und umgibt ein Leiterkabel.

Der Entriegelungskörper 24 kann mit einer Verriegelungseinrichtung an einem weiteren Steckverbinder z. B. eines Geräts oder eines anderen Leiters zusammenwirken und den Steckverbinder 1 mit dem weiteren Steckverbinder verriegeln, um die Verbindung des Leiters zu sichern. Die Verriegelungseinrichtung ist vorzugweise lösbar ausgebildet. Zum Lösen des Steckverbinders aus der Verbindung mit dem weiteren Steckverbinder kann der Entriegelungskörper 24 relativ zum Grundkörper 2 und zum Knickschutz 4 bewegt, insbesondere verschoben werden, wodurch die Verriegelungseinrichtung gelöst wird.

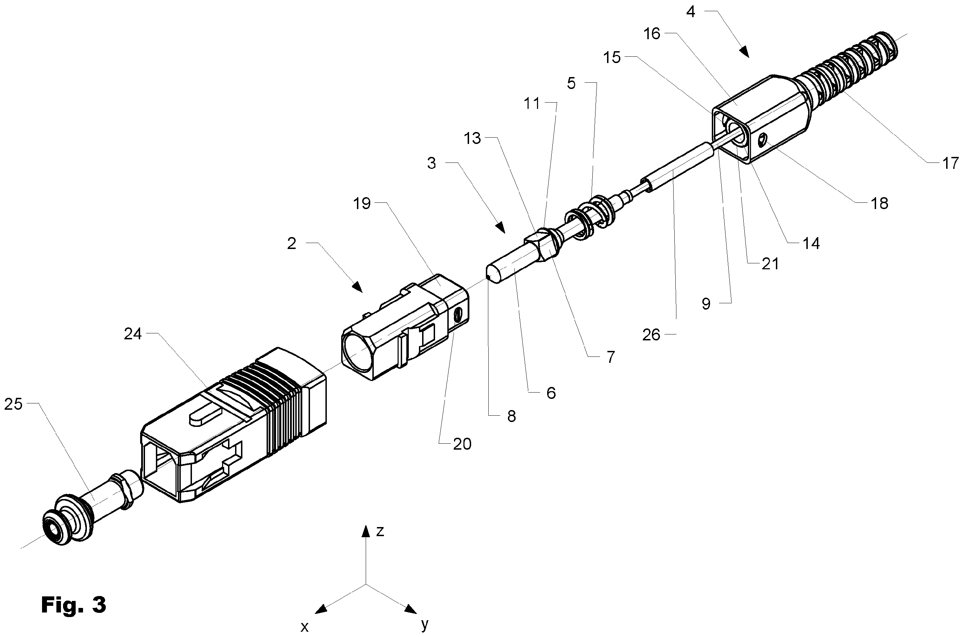

In den Figuren 2 und 3 sind der hülsenartige Grundkörper 2 mit einer Durchgangsöffnung, ein rohrartiger Leiterhalter 3 und der Knickschutz 4 ersichtlich. Zwischen dem Leiterhalter 3 und dem Knickschutz 4 ist das Federelement 5 eingesetzt. Der Leiterhalter 3 umfasst eine Ferrule 6 und einen Ferrulenhalter 7 mit einer axialen Verlängerung in Richtung des Kabelendes. Innerhalb der Ferrule 6 ist ein Leiter 8 angeordnet, beispielsweise eine optische Faser, die aus einem Leiterführungsschlauch 9 austritt. Um den Leiterführungsschlauch 9 kann ein Kabelmantel (nicht gezeigt) vorgesehen sein.

Der Grundkörper 2 weist einen radial nach innen ragenden Stoppanschlag 10 auf, der vorzugsweise am Grundkörper angeformt, bzw. aus diesem ausgeformt ist. Der Leiterhalter 3 weist komplementär zum Stoppanschlag 10 einen radial nach aussen ragenden Vorschubanschlag 11 auf, mit welchem der Leiterhalter 3 in axialer Richtung gegen den Stoppanschlag 10 in Einsteckrichtung anstösst. Der Vorschubanschlag 11 ist z. B. durch eine Kante am Ferrulenhalter 7 gegeben. Weiter weist der Grundkörper 2 in einem Bereich des Innenumfangs einen polygonalen Querschnitt auf, im dargestellten Beispiel einen viereckigen Querschnitt. Der Bereich wird durch Führungsinnenflächen 12 am Innenumfang ausgebildet. Am Leiterhalter 3 sind dazu passend an einem Bereich des Aussenumfangs Führungsaussenflächen 13 vorgesehen. Ist der Leiterhalter 3 in den Grundkörper 2 eingeführt, kommen die Führungsaussenflächen 13 an den Führungsinnenflächen 12 zu liegen, so dass der Leiterhalter 3 relativ zum Grundkörper 2 ausgerichtet ist und gegen eine Verdrehung um die Längsachse L relativ zum Grundkörper 2 gesichert ist. Vorzugsweise weisen die Führungsinnen- und -aussenflächen 12 und 13 eine axiale Länge derart auf, dass der Leiterhalter 3 über den gesamten möglichen Verschiebeweg innerhalb des Grundkörpers durch diese Flächen geführt bleibt. Die Führungsinnen- und -aussenflächen 12 und 13 bilden daher gemeinsam eine Führungseinrichtung am Grundkörper 2 und am Leiterhalter 3.

Der Knickschutz 4 weist axial einen Durchgangskanal 14 auf, durch den der Leiter 8 geführt ist und in dem der Leiterhalter 3 teilweise angeordnet ist. Der Knickschutz weist ein konzentrisch um die Mittelachse verlaufendes Kanalrohr 15 auf, das den Durchgangskanal 14 umgibt. Wie in Figur 1 ersichtlich ist, ist der Durchgangskanal konisch ausgebildet und verjüngt sich in Richtung des Kabelendes des Steckverbinders. Grundsätzlich kann der Durchgangskanal auch zylindrisch ausgebildet sein. Um das Kanalrohr 15 ist eine Wandung 16 vorgesehen, die im Querschnitt rechteckig ausgebildet ist. Das Kanalrohr 15 und die Wandung 16 ragen von einem Basiskörper des Knickschutzes in axialer Richtung ab und sind konzentrisch zu einander angeordnet. Zwischen dem Kanalrohr 15 und der Wandung 16 ist ein Freiraum ausgebildet. Am der Wandung 16 und dem Kanalrohr 15 gegenüberliegenden Ende weist der Knickschutz 4 einen Biegebereich 17 auf, der flexibel aus der axialen Grundposition gebogen werden kann, wie es aus dem Stand der Technik bekannt ist. Die Wandung 16 weist wenigstens an einer Umfangsfläche eine Rastöffnung 18 auf, die einer Rastverbindung des Grundkörpers 2 mit dem Knickschutz 4 dient.

Der Grundkörper 2 weist in Richtung des Knickschutzes 4 einen Aussenumfangsbereich 19 auf, der komplementär zur Wandung 16 ausgebildet ist, um mit dieser eine Verbindung eingehen zu können. Der Aussenumfangsbereich 19 weist daher ebenfalls einen rechteckigen Querschnitt auf, jedoch mit geringfügig kleinerem Durchmesser als die Wandung 16. Auf der Aussenseite des Umfangsbereichs 19 ist ein Rastnocken 20 angeordnet, der mit der Rastöffnung 18 des Knickschutzes 4 verrasten kann.

Der Grundkörper 2 und der Knickschutz 4 werden unmittelbar miteinander verbunden, indem der Aussenumfangsbereich 19 des Grundkörpers 2 in den Zwischenraum zwischen das Kanalrohr 15 und die Wandung 16 eingeführt wird bis der Rastnocken 20 in die Rastöffnung 18 einschnappt. Der Grundkörper 2 und der Knickschutz 4 sind dadurch mittels einer Rastverbindung mit einander verbunden. Ferner kann eine radiale verlaufende Kante am Grundkörper 2 gegen die Vorderseite der Wandung 16 anschlagen, wenn der Grundkörper 2 und der Knickschutz 4 vollständig ineinander geschoben sind. Grundsätzlich ist die Verbindung zwischen Grundkörper 2 und Knickschutz 4 unlösbar vorgesehen. Falls gewünscht, kann die Verbindung aber lösbar ausgestaltet werden.

Der Knickschutz 4 weist einen Federanschlag 21 auf, an dem ein erstes Ende des Federelements 5 anliegt. Der Federanschlag 21 wird von einer Frontfläche des Knickschutzes 4, insbesondere von einer Frontfläche des Kanalrohrs 15 gebildet. Als Frontfläche ist jede Fläche des Knickschutzes definiert, die radial zur Längsachse L verläuft und an der der Knickschutz in Richtung des Einsteckendes des Steckverbinders endet. Der Leiterhalter 3 weist einen Federgegenanschlag 22 auf, der radial nach aussen absteht. Vorzugsweise ist der Federgegenanschlag 22 am Ferrulenhalter 7 vorgesehen. Beispielweise kann der Ferrulenhalter 7 eine Art radial umlaufenden Scheibenkörper aufweisen, dessen zum Steckende weisende Seite als Stoppanschlag 10 und dessen zum Kabelende weisende Seite als Federgegenanschlag 22 dient. Der Scheibenkörper mit dem Stoppanschlag 10 und dem Federgegenanschlag 22 ist vorzugsweise hinter den Führungsaussenflächen 13 vorgesehen.

Das Federelement 5 ist im gezeigten Ausführungsbeispiel als Schraubenfeder ausgebildet, die den Leiterhalter 3 umgibt. Der Durchmesser des Kanalrohrs 15 ist auf den Durchmesser der Schraubenfeder abgestimmt, so dass diese mit ihrem ersten Ende an der Frontfläche des Kanalrohrs 15, die den Federanschlag 21 bildet, zu liegen kommt. Das zweite Ende des Federelements 5 liegt am Federgegenanschlag 22 an. In Figur 2 ist der Steckverbinder 1 in einer Vorschubposition des Leiterhalters 3 relativ zum Grundkörper 2 gezeigt. In dieser Position ist das Federelement 5 geringfügig vorgespannt und drückt den Vorschubanschlag 11 des Leiterhalters 3 gegen den Stoppanschlag 10 des Grundkörpers 2. Der Leiterhalter 3 kann entgegen der Kraft des Federelements 5 relativ zum Grundkörper 2 und zum Knickschutz 4 axial verschoben werden, wobei die Federkraft vom Knickschutz 4 über die Rastverbindung 18, 20 auf den Grundkörper übertragen wird. Der Leiterhalter 3 kann soweit eingeschoben werden bis er an einen Einschubanschlag 23 am Knickschutz 4 anstösst. Der Einschubanschlag 23 wird in der gezeigten Ausführungsform ebenfalls von der Frontfläche des Kanalrohrs 15 gebildet. Der Leiterhalter 3 kann soweit verschoben werden, bis die Spiralen der Schraubenfeder aufeinander zu liegen kommen und gegen den Einschubanschlag 23 stossen. Der Verschiebeweg des Leiterhalters 3 ist somit durch den axialen Abstand zwischen dem Stoppanschlag 10 am Grundkörper 2 und dem Einschubanschlag 23 am Knickschutz 4 definiert.

Bei der Herstellung des Steckverbinders 1 wird beispielsweise das Federelement 5 von hinten über die Verlängerung des Ferrulenhalters 7 geschoben bis es an dem Federgegenanschlag 22 anstösst. Der Ferrulenhalter 7 mit der Ferrule 6 wird anschliessend in den Grundkörper 2 eingeführt, bis die Führungsinnenflächen 12 des Grundkörpers an den Führungsaussenflächen 13 des Ferrulenhalters entlang gleiten und der Vorschubanschlag 11 des Ferrulenhalters 7 gegen den Stoppanschlag 10 des Grundkörpers 2 anstösst. Dann wird der Knickschutz 4 mit der Wandung 16 über den Aussenumfangsbereich 19 geschoben bis der Rastnocken 20 in die Rastöffnung 18 einschnappt. Dabei kann eine Führungshülse 26 als Einführhilfe dienen. Grundsätzlich ist dies jedoch nicht zwingend notwendig. Gleichzeitig wird das Federelement 5 gegen den Federanschlag 21 gepresst und das Federelement 5 in geringem Masse vorgespannt. Bei einem Steckverbinder nach der vorliegenden Erfindung müssen keine weiteren Zwischenelemente zwischen dem Grundkörper 2 und dem Knickschutz 4 positioniert und befestigt werden.

Es kann eine Schutzkappe 25 vorgesehen sein, die auf die Ferrule 6 aufgesetzt werden kann, um den Leiter 8 zu schützen, wenn der Steckverbinder nicht eingesteckt ist.

## Patentansprüche

1. Steckverbinder zum Verbinden wenigstens eines Leiters (8) umfassend:
a. einen Grundkörper (2) mit einer durchgehenden Öffnung und einem Stoppanschlag (10),
b. wenigstens einen rohrartigen Leiterhalter (3), der zumindest teilweise innerhalb des Grundkörpers (2) angeordnet und in diesem beweglich gelagert ist, wobei in einer Vorschubposition des Leiterhalters (3) ein Vorschubanschlag (11) des Leiterhalters (3) am Stoppanschlag (10) angreift,
c. einen um einen Leiter (8) angeordneten Knickschutz (4), der zumindest teilweise axial über den Grundkörper (2) hervorsteht,
d. wenigstens ein Federelement (5) zur Positionierung des Leiters relativ zum Grundkörper (2),
e. wobei das wenigstens eine Federelement (5) zwischen dem Leiterhalter (3) und dem Knickschutz (4) eingespannt ist, wobei der Knickschutz (4) und der Grundkörper (2) mechanisch wirkverbunden sind und zur Übertragung der Kraft des Federelementes (5) dienen,
f. wobei der Knickschutz (4) hülsenförmig mit einem Durchgangskanal (14) ausgebildet ist und den Leiterhalter (3) teilweise in sich aufnimmt, wobei der Durchgangskanal (14) von einem im Inneren des Knickschutzes (4) ausgeformten Kanalrohr (15) gebildet wird,
g. wobei der Knickschutz (4) eine das Kanalrohr (15) umgebende Wandung (16) aufweist und ein Ende des Grundkörpers (2) in dem Knickschutz (4) zwischen Wandung (16) und Kanalrohr (15) aufgenommen ist,
h. und wobei der Knickschutz (4) einen durch eine Frontfläche des Kanalrohrs (15) gebildeten Federanschlag (21) aufweist, an welchem ein erstes Ende des Federelements (5) anliegt.

2. Steckverbinder nach einem der vorhergehenden Ansprüche, **dadurch gekennzeichnet, dass** der Leiterhalter (3) einen radial nach aussen vorstehenden Federgegenanschlag (22) aufweist, an welchem ein zweites Ende des Federelements (5) angreift.

3. Steckverbinder nach einem der vorhergehenden Ansprüche, **dadurch gekennzeichnet, dass** der Grundkörper (2) in montiertem Zustand unmittelbar mit dem Knickschutz (4) wirkverbunden ist.

4. Steckverbinder nach einem der vorhergehenden Ansprüche, **dadurch gekennzeichnet, dass** der Grundkörper (2) und der Knickschutz (4) in montiertem Zustand mit einer Rastverbindung (18, 20) wirkverbunden sind.

5. Steckverbinder nach einem der vorhergehenden Ansprüche, **dadurch gekennzeichnet, dass** eine Führungseinrichtung (12, 13) am Grundkörper (2) und am Knickschutz (4) ausgebildet ist, die zur Ausrichtung von Grundkörper (2) und Knickschutz (4) zueinander dient.

6. Steckverbinder nach einem der vorhergehenden Ansprüche, **dadurch gekennzeichnet, dass** der Vorschubanschlag (11) des Leiterhalters (3) radial nach aussen vorstehend ausgebildet ist und der Stoppanschlag (10) des Grundkörpers (2) radial nach innen stehend ausgebildet ist.

7. Steckverbinder nach einem der vorhergehenden Ansprüche, **dadurch gekennzeichnet, dass** der Knickschutz (4) einen Einschubanschlag (23) in einer Einschubposition bildet, in welcher der Leiterhalter (3) in den Grundkörper (2) entgegen der Kraft des Federelements (5) eingeschoben ist.

8. Steckverbinder nach einem der vorhergehenden Ansprüche, **dadurch gekennzeichnet, dass** das Federelement (5) als Schraubenfeder ausgebildet ist, die um den Leiterhalter (3) angeordnet ist.

9. Steckverbinder nach einem der vorhergehenden Ansprüche, **dadurch gekennzeichnet, dass** das Kanalrohr (15) des Knickschutzes (4) konisch ausgebildet ist.

10. Steckverbinder nach Anspruch 8, **dadurch gekennzeichnet, dass** der Durchmesser des Kanalrohrs (15) im Wesentlichen einem Durchmesser der Schraubenfeder entspricht.

11. Steckverbinder nach einem der vorhergehenden Ansprüche, **dadurch gekennzeichnet, dass** der Leiterhalter (3) eine Ferrule (6), einen Ferrulenhalter (7) und eine in den Knickschutz (4) hineinragende Ferrulenverlängerung aufweist.

12. Steckverbinder nach einem der vorhergehenden Ansprüche, **dadurch gekennzeichnet, dass** ein Entriegelungskörper (24) zur Entriegelung des Steckverbinders (1) aus einer Steckverbindung vorgesehen ist, der zumindest den Grundkörper (2) umgibt und relativ zu diesem beweglich gelagert ist.

## Claims

1. A plug-in connector for connecting at least one conductor (8), comprising:
a. a base body (2) having a through-going opening and a limit stop (10),
b. at least one tubular conductor holder (3) which is arranged at least partially inside the base body (2) and which is movably arranged therein, wherein in a feed position of the conductor holder (3) a feed stop (11) of the conductor holder (3) acts on the limit stop (10),
c. an anti-kink element (4) which is arranged around a conductor (8) and which protrudes at least partially axially over the base body (2),
d. at least one spring element (5) for positioning the conductor relative to the base body (2),
e. wherein the at least one spring element (5) is clamped between the conductor holder (3) and the anti-kink element (4), wherein the anti-kink element (4) and the base body (2) are operatively connected together in a mechanical manner and serve for transmitting the force of the spring element (5),
f. wherein the anti-kink element (4) is configured in a sleeve-shaped manner with a through-channel (14) and receives the conductor holder (3) at least partially therein, wherein the through-channel (14) is formed by a channel tube (15) which is shaped into the interior of the anti-kink element (4),
g. wherein the anti-kink element (4) comprises a wall (16) surrounding the channel tube (15) and an end of the base body (2) is received in the anti-kink element (4) between the wall (16) and the channel tube (15),
h. and wherein the anti-kink element (4) comprises a spring stop (21) which is formed by a front surface of the channel tube (15), a first end of the spring element (5) bearing against said spring stop.

2. The plug connector according to one of the preceding claims, **characterised in that** the conductor holder (3) comprises a radially outwardly protruding counter spring stop (22), a second end of the spring element (5) acting thereon.

3. The plug-in connector according to one of the preceding claims, **characterised in that** in the mounted state the base body (2) is operatively connected directly to the anti-kink element (4).

4. The plug-in connector according to one of the preceding claims, **characterised in that** in the mounted state the base body (2) and the anti-kink element (4) are operatively connected by a latching connection (18, 20) .

5. The plug-in connector according to one of the preceding claims, **characterised in that** a guide device (12, 13), which serves for aligning the base body (2) and the anti-kink element (4) with one another, is arranged on the base body (2) and on the anti-kink element (4).

6. The plug-in connector according to one of the preceding claims, **characterised in that** the feed stop (11) of the conductor holder (3) is configured to protrude radially outwardly and the limit stop (10) of the base body (2) is configured to extend radially inwardly.

7. The plug-in connector according to one of the preceding claims, **characterised in that** the anti-kink element (4) forms an insertion stop (23) in an insertion position in which the conductor holder (3) is inserted into the base body (2) counter to the force of the spring element (5) .

8. The plug-in connector according to one of the preceding claims, **characterised in that** the spring element (5) is configured as a helical spring which is arranged around the conductor holder (3).

9. The plug-in connector according to one of the preceding claims, **characterised in that** the channel tube (15) of the anti-kink element (4) is of conical configuration.

10. The plug-in connector according to Claim 8, **characterised in that** the diameter of the channel tube (15) substantially corresponds to a diameter of the helical spring.

11. The plug-in connector according to one of the preceding claims, **characterised in that** the conductor holder (3) comprises a ferrule (6), a ferrule holder (7) and a ferrule extension protruding into the anti-kink element (4) .

12. The plug-in connector according to one of the preceding claims, **characterised in that** an unlocking body (24), which surrounds at least the body (2) and is movably mounted relative thereto, is provided for unlocking the plug-in connector (1) from a plug-in connection.

## Revendications

1. Connecteur enfichable pour relier au moins un conducteur (8) comprenant :
a. un corps de base (2) avec une ouverture traversante et une butée d'arrêt (10),
b. au moins un porte-conducteur de type tubulaire (3), qui est disposé au moins en partie à l'intérieur du corps de base (2) et est logé dans celui-ci de façon mobile, sachant que dans une position d'avance du porte-conducteur (3), une butée d'avance (11) du porte-conducteur (3) vient en prise sur la butée d'arrêt (10),
c. une protection anticoque (4) disposée autour d'un conducteur (8) qui ressort au moins en partie axialement sur le corps de base (2),
d. au moins un élément à ressort (5) destiné au positionnement du conducteur par rapport au corps de base (2),
e. sachant qu'au moins un élément à ressort (5) est serré entre le porte-conducteur (3) et la protection anticoque (4), sachant que la protection anticoque (4) et le corps de base (2) sont mécaniquement reliés de façon fonctionnelle et servent à transmettre la force de l'élément à ressort (5),
f. sachant que la protection anticoque (4) est constituée en forme de manchon avec un conduit de passage (14) et loge en partie en elle le porte-conducteur (3), sachant que le conduit de passage (14) est formé d'un tube de conduit (15) conformé à l'intérieur de la protection anticoque (4),
g. sachant que la protection anticoque (4) comporte une paroi (16) entourant le tube de conduit (15) et qu'une extrémité du corps de base (2) est logée dans la protection anticoque (4) entre la paroi (16) et le tube de conduit (15),
h. et sachant que la protection anticoque (4) comporte une butée à ressort (21) formée par une surface frontale du tube de conduit (15) sur laquelle vient s'appliquer une première extrémité de l'élément à ressort (5).

2. Connecteur enfichable selon la revendication précédente, **caractérisé en ce que** le porte-conducteur (3) comporte une contrebutée à ressort (22) faisant saillie radialement vers l'extérieur sur laquelle vient en prise une deuxième extrémité de l'élément à ressort (5) .

3. Connecteur enfichable l'une quelconque des revendications précédentes, **caractérisé en ce que** le corps de base (2) est relié de façon fonctionnelle à l'état monté directement à la protection anticoque (4).

4. Connecteur enfichable l'une quelconque des revendications précédentes, **caractérisé en ce que** le corps de base (2) et la protection anticoque (4) sont reliés à l'état monté de façon fonctionnelle à un raccord encliquetable (18, 20).

5. Connecteur enfichable l'une quelconque des revendications précédentes, **caractérisé en ce qu'un** dispositif de guidage (12, 13) est constitué sur le corps de base (2) et sur la protection anticoque (4), qui sert à l'orientation du corps de base (2) et de la protection anticoque (4) l'un par rapport à l'autre.

6. Connecteur enfichable l'une quelconque des revendications précédentes, **caractérisé en ce que** la butée d'avance (11) du porte-conducteur (3) est constituée faisant radialement saillie vers l'extérieur et la butée d'arrêt (10) du corps de base (2) est constituée faisant radialement saillie vers l'intérieur.

7. Connecteur enfichable l'une quelconque des revendications précédentes, **caractérisé en ce que** la protection anticoque (4) forme une butée d'insertion (23) dans une position d'insertion dans laquelle le porte-conducteur (3) est inséré dans le corps de base (2) contre la force de l'élément à ressort (5).

8. Connecteur enfichable selon l'une quelconque des revendications précédentes, **caractérisé en ce que** l'élément à ressort (5) est constitué comme un ressort hélicoïdal, qui est disposé autour du porte-conducteur (3) .

9. Connecteur enfichable selon l'une quelconque des revendications précédentes, **caractérisé en ce que** le tube de conduit (15) de la protection anti-flambage (4) est constitué conique.

10. Connecteur enfichable selon la revendication 8, **caractérisé en ce que** le diamètre du tube de conduit (15) correspond pour l'essentiel à un diamètre de ressort hélicoïdal.

11. Connecteur enfichable selon l'une quelconque des revendications précédentes, **caractérisé en ce que** le porte-conducteur (3) comporte une férule (6), un support de férule (7) et une rallonge de férule faisant saillie dans la protection anticoque (4).

12. Connecteur enfichable selon l'une quelconque des revendications précédentes, **caractérisé en ce qu'un** corps de déverrouillage (24) fait d'un raccord enfichable est prévu pour déverrouiller le connecteur enfichable (1), qui entoure au moins le corps de base (2) et est logé de façon mobile par rapport à celui-ci.
